# EUROPÄISCHE PATENTSCHRIFT

(11) **EP 0 363 597 B1**
(45) Veröffentlichungstag und Bekanntmachung des Hinweises auf die Patenterteilung: **14.06.1995**
(21) Anmeldenummer: 89114551.8
(22) Anmeldetag: 07.08.1989
(51) Int. Cl.: B29C 51/16, B29C 51/42, B29C 51/36

(54) **Verfahren zur Herstellung von Formteilen oder Gegenständen aus thermoverformbaren Kunststofffolien, kunststoffhaltigen Bahnen oder Kunststoffplatten nach dem Negativtiefziehverfahren**
Method for the manufacture of shaped parts or objects from thermoformable plastics films, webs or sheets by deep drawing
Procédé de fabrication de pièces ou objets moulés par étirage à partir de feuilles, pellicules ou plaques en matière plastique thermoformable

(30) Priorität: 11.10.1988 DE 3834607
(43) Veröffentlichungstag der Anmeldung: 18.04.1990
(73) Patentinhaber: ALKOR GMBH KUNSTSTOFFE, D-81451 München (DE)
(72) Erfinder: Landler, Josef, Chem.-Ing., D-8190 Wolfratshausen (DE)

(56) Entgegenhaltungen:
- EP-A- 0 227 202
- EP-A- 0 288 728
- EP-A- 0 288 733
- WO-A-85/02142
- DE-U- 8 706 204
- FR-A- 2 647 051
- GB-A- 2 133 980
- GB-A- 2 167 014
- US-A- 3 527 854
- US-A- 3 753 830
- US-A- 4 236 885

## Beschreibung

Die vorliegende Erfindung betrifft ein Verfahren zur Herstellung von Formteilen oder Gegenständen nach dem Negativtiefziehverfahren aus thermoverformbaren Kunststoffschaumbahnen oder thermoverformbaren Kunststoffschaumlaminatbahnen, die unter Mitverwendung eines Druckunterschiedes und unter Erwärmung auf eine Temperatur innerhalb des thermoplastischen Bereiches bis 260 °C in die Negativtiefziehform eingebracht und in der Negativtiefziehform unter Narbgebung und/oder Oberflächendekoration sowie unter Mitverwendung einer porösen, luftdurchlässigen Formoberfläche aufweisenden Negativtiefziehform verformt werden, wobei die Verformung und/oder Vorformung unter Mitverwendung eines Druckunterschiedes und unter Verwendung eines allseits wirkenden Unterdruckes sowie eines Trägers erfolgt, der mit der Bahn verbunden wird.

Durch die Einhaltung bestimmter Verfahrensmerkmale, u. a. Einhaltung einer Maximalgrenze für flüchtige Bestandteile, bestimmte Formgestaltung des Trägers, der Negativtiefziehformoberlächen, Verfahrenstemperatur usw. gelingt es, im Rahmen der vorliegenden Erfindung sowohl die nach dem Verfahren hergestellten Erzeugnisse zu verbessern als auch das Verfahren selbst.

In der DE-OS 3128977 ist bereits ein Verfahren zur Herstellung von Verbundkörpern unter Verwendung eines aus mehreren Einzeltischen bestehenden Drehtisches beschrieben, bei dem eine Folie im Positivverfahren verformt und auf einen luftundurchlässigen Träger unter Verwendung eines allseits wirkenden Unterdruckes aufkaschiert wird.

Nachteilig ist bei diesem Verfahren und bei dieser Vorrichtung u.a., daß von einem luftundurchlässigen Träger, der somit keine Ausstanzungen oder Ausnehmungen aufweisen darf, ausgegangen werden muß, daß ein allseits wirkender Unterdruck zwischen dem Träger und der vorgeformten Folie vorhanden sein muß, wobei zur Herstellung eines entsprechenden Unterdruckes zwischen dem Träger und der Folie eine entsprechende unterdruckfeste Hilfsvorrichtung benötigt wird. Die nach diesem Verfahren einem Überdruck oder Atmosphärendruck bei der Verformung ausgesetzte Folienoberseite kann innerhalb dieses Verfahrens nicht geprägt oder dekoriert werden.

Aus der DE-OS 3108571 ist weiterhin ein Verfahren zum Herstellen eines Trägers und einer auf dem Träger angeordnete Deckschicht, die aus thermoplastischem Dekormaterial besteht, bekannt. Das Dekormaterial, das auch zur Innenverkleidung für Kraftfahrzeuge dient, kann jedoch nach diesem Verfahren nur in einem gegenüber dem angrenzenden Bereich abgeänderten Teilbereich auf Verformungstemperatur erhitzt und gegen den Träger gedrückt sowie dessen Formgebungen angepaßt werden, wobei zur Herstellung des mit der Dekorfolie versehenen Trägers dieser in der zu verformenden Teilfläche mit einer weichen Polsterung versehen werden muß. Das Andrücken an den Träger in dem Teilbereich erfolgt unter Aussparen des Differenzdruckes, wobei eine auf dem Träger angebrachte Kleberschicht durch das heiße Dekormaterial aktiviert wird.

Bei diesem Verfahren wird die Folie nicht im Negativtiefziehverfahren verformt und geprägt, sondern wird einem Positivverfahren unter Verwendung eines Unterdruckes zum Träger hin unterworfen. Die Prägung kann nur in Teilbereichen und nur unter Verwendung einer weichen Unterpolsterung durchgeführt werden, da sonst die Gefahr der Schädigung der Folie besteht. Da die Prägeform nicht sehr heiß geführt werden kann und nur bestimmte Bereiche gegenüber den angrenzenden Bereichen verformt werden, ergibt sich zusätzlich der Nachteil der Gefahr der späteren Ausbildung von Spannungsrissen.

Aus der GB-A-2167014 ist ein Verfahren zur Herstellung von geprägten Kunststoffgegenständen bekannt, wobei die Folien ebenfalls mit einem Träger hinterlegt sind und die Form feine Poren aufweist. Die zur Verformung verwendete Form wird jedoch dabei auf elektrochemischem Wege hergestellt und mit einer gleichmäßig dicken Metallschicht überzogen, wobei offensichtlich die Poren als Fehlstenn (z.B. durch Einlagerung von Glasfasern) ausgebildet sind.

Gemäß GB-A-2167014 können daher keine Partikel hergestellt werden, so z.B. keine Mikrometall- oder Keramik-Mikrometall-Partikel mit einem Teilchendurchmesser unter 80 »m ausgebildet werden, da durch die elektrochemische Metallabscheidung gleichmäßig dicke bzw. dünne Schichten und keine Partikel erzielt werden.

Bestimmte Auswahlkriterien hinsichtlich der Temperaturführung der Formen, der anzuwendenden Kunststoffe, insbesondere hinsichtlich der Zusammensetzung oder der Beschränkung der Gewichtsmengen der flüchtigen Bestandteile, sind aus der GB-A-2167014 nicht zu entnehmen. Darüberhinaus wird die Folie gemäß GB-A-2167014 in der Form verpreßt, während gemäß der vorliegenden Erfindung nur mit Unterdruck bzw. Druck (Luft) gearbeitet wird.

Die im elektrochemischen Verfahren hergestellten Formoberflächen sind nicht zur Herstellung feiner lederähnlicher Narbungen der Folienbahnen oder ähnlicher feiner Oberflächendekorationen geeignet. Die Form ist jedoch druckbelastbarer und zum Verpressen besser geeignet. Durch die Einbringungen von Poren als Fehlstellen ist jedoch auch die Anzahl der Poren pro cm² nicht sehr hoch und die Anlegung von Unterdruck und dergleichen muß in Kombination mit dem Verpressen in der Form angewendet werden.

In dem Gebrauchsmuster DE-U-8706204 werden Negativtiefziehvorrichtungen beschrieben. Ein innerhalb des Verfahrens angebrachter vorgeformter Träger ist nicht vorhanden. Keine Angaben über einzuhaltende flüchtige Stoffe und dergleichen sind dem Gebrauchsmuster zu entnehmen.

Ziel und Aufgabe der vorliegenden Erfindung war es, eine Verbesserung des Negativtiefziehverfahrens zu erzielen. Die Negativtiefziehverfahren sollten auch bei Verwendung von Schaumbahnen oder Schamlaminatbahnen zur Herstellung auch von komplizierten Teilen oder oberflächendekorierter oder -strukturierter Formteile oder Gegenstände geeignet sein, wobei die Negativtiefziehform auch bei mehreren nacheinander hergestellten Formteilen oder Gegenständen funktionsfähig bleiben sollte.

Erfindungsgemäß wurde festgestellt, daß ein Verfahren zur Herstellung von Formteilen oder Gegenständen nach dem Negativtiefziehverfahren aus thermoverformbaren Kunststoffschaumbahnen oder thermoverformbaren Kunststoffschaumlaminatbahnen, die unter Mitverwendung eines Druckunterschiedes und unter Erwärmung auf eine Temperatur innerhalb des thermoplastischen Bereiches bis 260 °C in die Negativtiefziehform eingebracht und in der Negativtiefziehform unter Narbgebung und/oder Oberflächendekoration sowie unter Mitverwendung einer porösen, luftdurchlässigen Formoberfläche aufweisenden Negativtiefziehform verformt werden, wobei die Verformung und/oder Vorformung unter Mitverwendung eines Druckunterschiedes und unter Verwendung eines allseits wirkenden Unterdruckes sowie eines Trägers erfolgt, der mit der Bahn verbunden wird, diesen Zielen und Aufgaben gerecht wird. Gemäß der Erfindung werden Kunststoffschaumbahnen oder Kunststoffschaumlaminatbahnen verwendet, deren Gesamtgehalt der bei der Verformungstemperatur und Verformungszeit flüchtigen Bestandteile kleiner als 3 Gew.-% ist. Weiterhin wird ein geformter Träger, der auf seiner der Negativtiefziehform zugewandten Oberfläche die Form, Formteilbereiche oder Oberflächenteilbereiche der Negativtiefziehform (in Positivtiefziehform) aufweist verwendet. Die mikroperöse, luftdurchlässige Formoberfläche der Negativtiefziehform weist dabei eine metall-, metallegierungs-, mikrometall-partikelhaltige, keramik-metall- und/oder keramik-mikrometall-partikelhaltige Schicht oder Oberfläche mit einer durchschnittlichen Metallschichtdicke oder Metallpartikeldicke unter 80 »m auf und die Negativtiefziehform wird auf eine Temperatur von 18 bis 120 °C eingestellt und zwischen der kälteren Werkzeugtemperatur und der Kunststoffschaumbahn oder Kunststoffschaumlaminatbahn wird ein Temperaturunterschied von mehr als 30 °C eingehalten.

Nach der Thermoverformung wird die Kunststoffschaumbahn oder Kunststoffschaumlaminatbahn in der Negativtief ziehform unter Verwendung einer Temperaturdifferenz von mehr als 50 K schockgekühlt und als Kunststoffschaum wird Polyethylen-, Polypropylen-, Polyethylen-Polypropylen-Schaum oder Polyurethanschaum verwendet, wobei für die Oberschicht oder Oberfolie der Kunststoffschaumlaminatbahn entweder die Zusammensetzung 1 eingesetzt wird, die ein Propylenhomo-, -co-, -block- oder pfropfpolymerisat (Hartphase) und mindestens einen weiteren Thermoplasten oder ein thermoplastisches Elastomer mit einer niedrigeren Fließtemperatur oder niedrigerem Fließtemperaturbereich, Kristallitschmelztemperatur oder Kristallitschmelztemperaturbereich oder einem höheren Schmelzindex (Weichphase) enthält oder daraus besteht, wobei der Thermoplast oder das thermoplastische Elastomer als mindestens eine Komponente eine Legierung, ein Co-, Pfropf-, Block- oder Terpolymerisat von oder mit einem Acrylnitril, Dien, Butadien, Ethylenbuthylen und/oder Styrol, vorzugsweise Ethylen-Butylen-Styrol-Triblockpolymerisat (SEBS) und/oder andere Styrolblockpolymere, Ethylen-Propylen-Dien-Pfropf- oder -Copolymerisat (EPDM), vernetzten oder teilvernetzten Naturkautschuk (NR), vernetzten oder teilvernetzten Nitrol-Butadien-Kautschuk (NBR) und/oder Ethylen-Propylen-Co- oder Pfropfpolymerisat (EPM) enthält oder die Zusammensetzung 2 eingesetzt wird, die ein Polystyrol (PS), Polyamid (PA), Styrol-Acrylnitril-Co- oder -Pfropfpolymerisat (SAN) und/oder Acrylsäureester-Styrol-Acrylnitril-Copolymerisat (ASA) (Hartphase) und mindestens einen weiteren Thermoplasten oder ein thermoplastisches Elastomer mit einer niedrigeren Fließtemperatur oder niedrigeren Fließtemperaturbereich, Kristallitschmelztemperatur oder Kristallitschmelztemperaturbereich oder einem höheren Schmelzindex (Weichphase) enthält oder daraus besteht.

Der die Form, einen Oberflächenteilbereich oder Formteilbereich (in Positivform) aufweisende geformte Träger wird von dem geformten Positivstempel gestützt oder gehalten und geführt, wobei der Positivstempel in der Oberflächenform oder Oberflächenstruktur ganz oder in Formteilbereichen der Form der gegenüberliegenden zu stützenden und zu führenden Trägerrückfläche angepaßt ist.

Nach einer bevorzugten Ausführungsform hat der geformte Träger eine kleiner Abmessung als der Positivstempel. Der Positivstempel weist auf seinem dem Träger zugeordneten Oberflächenteil ganz oder in Teilbereichen die zugewandte Oberflächenform und Struktur des Trägers und in seiner über den Träger hinausgehenden Stütz- oder Formfläche auf seiner der Negativtiefziehform zugewandten Oberfläche die Form, Formteilbereiche oder Oberflächenteilbereich der Negativtiefziehform (in Positivform).

Der vorgeformte Träger wird bevorzugt von einem Stapel oder einer Stapelvorrichtung, in dem oder in der der Träger gestapelt ist, durch eine Übergabevorrichtung auf ein vorbestimmtes Oberflächenteil der, der Negativtiefziehform zugewandten Oberfläche des Stempels aufgebracht.

Nach einer weiteren Ausführungsform wird der geformte Träger ohne Mitverwendung von Klebstoffen oder Klebeschichten mit der thermoverformten Kunststoffschaumbahn oder Kunststoffschaumlaminatbahn in der Hitze, vorzugsweise im thermoplastischen oder Schmelzbereich des Kunststoffes, verbunden.

Nach einer bevorzugten Ausführungsform des erfindungsgemäßen Verfahrens wird die Kunststoffschaumbahn oder Kunststoffschaumlaminatbahn in mindestens einer Vorwärm- und/oder Aufheizstation vorgewärmt und/oder auf eine Temperatur innerhalb des thermoplastischen Bereiches aufgeheizt, über einen Spann- oder Abdichtungsrahmen der Negativtiefziehform gespannt, gegebenenfalls durch Vorblasen, Stützluft oder Stützgas gehalten, nachfolgend durch Erhöhung des Blasdruckes zu der Negativtiefziehform hin gewölbt und durch einen vorgeformten Träger und/oder ein Stempelteil vorgeformt, in der Negativtiefziehform unter Narbgebung und/oder Oberflächendekoration thermoverformt, vorzugsweise unter Verwendung einer Temperaturdifferenz von
mehr als 80 °C, vorzugsweise
mehr als 100 °C,
zwischen der Kunststoffolie, -bahn oder -platte und Negativtiefziehform. Nachfolgend wird (nach dem Einbringen) in der Negativtiefziehform abgekühlt, vorzugsweise unter Verwendung einer Temperaturdifferenz von
mehr als 50 °C, vorzugsweise
mehr als 100 °C,
(bezogen auf die Temperatur der Kunststoffschaumbahn oder -schaumlaminatbahn unmittelbar vor oder im Augenblick der Einbringung in die Negativtiefziehform) gekühlt oder schockgekühlt.

Zwischen der Werkzeugtemperatur und der Kunststoffschaumbahn oder Kunststoffschaumlaminatbahn wird, wie bereits erwähnt, ein Temperaturunterschied von mehr als 30 °C, vorzugsweise mehr als 80 °C, eingehalten.

Die Kunststoffschaumbahn oder -schaumlaminatbahn wird vor der Einbringung in die Negativtiefziehform auf eine Temperatur in der Nähe oder oberhalb des Schmelzbereiches, Schmelzpunktes oder auf eine Temperatur innerhalb des thermoplastischen Bereiches bis 200 °C oder darüber aufgeheizt, während die Werkzeugtemperatur um mehr als 30 °C, vorzugsweise um mehr als 80 °C, unter dem Schmelzpunkt, dem Schmelzbereich oder der Schmelztemperatur oder Erweichungstemperatur der Kunststoffschaumbahn oder Kunststoffschaumlaminatbahn eingestellt wird.

Nach einer weiteren bevorzugten Ausführungsform des erfindungsgemäßen Verfahrens werden die Kunststoffolien mit einem wärmestabilen Polyolefin-, vorzugsweise Polypropylenschaum oder einem Polyurethanschaum mit einer Schaumschichtdicke von 0,5 bis 10 mm, vorzugsweise 1,5 bis 5 mm, laminiert oder versehen, bevor sie in der Negativtiefziehform dreidimensional verformt und die Folienoberfläche genarbt und/oder oberflächenstrukturiert werden, wobei die Schaumschicht mit einem Träger oder einer Trägerschicht hinterlegt wird.

Im Unterschied zu dem Positivtiefziehverfahren kann das erfindungsgemäße Verfahren verschiedene Muster des Urmodels wiedergeben, so z.B. zwei oder mehrere Arten von Narben, Ziernähten, Buchstaben, Designs, Knöpfen und/oder Holznarben oder anderen Strukturierungen.

Nach einer bevorzugten Ausführungsform wird die Kunststoffschaumbahn oder Kunststoffschaumlaminatbahn mindestens in einer Vorwärm- und/oder Aufheizstation vorgewärmt und/oder auf eine Temperatur innerhalb des thermoplastischen Bereiches aufgeheizt, oder es wird anstelle einer Kunststoffschaumlaminatbahn eine aus einem Breitschlitzextruder austretende Schmelzenbahn unter Ausnutzung der Wärmekapazität der Schmelzenbahn mit verwendet, die über einen Spann- oder Abdichtungsrahmen der Negativtief ziehform oder Kammer gebracht, gespannt und abgedichtet, gegebenenfalls durch Vorblasen, Stützluft oder Stützgas gehalten, nachfolgend durch Erhöhung des Blasdruckes zu der Negativtiefziehform hin gewölbt und durch einen vorgeformten Träger und/oder ein Stempelteil vorgeformt wird, in der Negativtiefziehform unter Narbgebung und/oder Oberflächendekoration thermoverformt, vorzugsweise unter Verwendung einer Temperaturdifferenz von mehr als 80 °C, vorzugsweise mehr als 100 °C, zwischen der Kunststoffschaumbahn oder Kunststoffschaumlaminatbahn und Negativtief ziehform und nachfolgend in der Negativtiefziehform unter Verwendung einer Temperaturdifferenz von mehr als 100 °C (bezogen auf die Temperatur der Kunststoffschaumbahn oder Kunststoffschaumlaminatbahn unmittelbar vor oder im Augenblick der Einbringung in die Negativtiefziehform) gekühlt oder schockgekühlt wird.

Mit Hilfe des erfindungsgemäßen Verfahrens gelingt es, verschiedenfarbige Materialien zu verformen, z.B. Folien mit Wolkendruck, Design und dgl.....

Gemäß der Erfindung werden somit im Negativtiefziehverfahren emissionsarme Kunststoffschaumbahnen oder Kunststofflaminatschaumbahnen verformt, wobei der Gesamtgehalt der bei der Verformungstemperatur und Verformungszeit flüchtigen Bestandteile kleiner als 3 Gew.-% ist.

Durch diese Ausführungsform wird sichergestellt, daß die poröse, vorzugsweise mikroporöse Negativtiefziehform funktionsfähig bleibt und eine nicht gewünschte Verstopfung der Mikroporen weitgehend vermieden wird.

Nach einer weiteren bevorzugten Ausführungsform wird die Entformung durch oder unter Mitverwendung eines Blas- oder Gasdruckes durchgeführt, wodurch eine Erleichterung der Entformung, insbesondere in kritischen Bereichen (Hinterschneidungen) ermöglicht wird.

Nach einer Ausführungsform wird ein Kunststoffolienlaminat eingesetzt, bei dem eine Schicht mit einem Treibmittel oder Treibmittelgemisch versshen ist, das bei dem Aufheizvorgang oder bei dem Umformvorgang ausschäumt.

Die Kunststoffschaumbahn oder -schaumlaminatbahn wird nach einer bevorzugten Ausführungsform von einer Abwickelvorrichtung kommend in minestens einer Vorwärm- und/oder Aufheizstation vorgewärmt und/oder auf eine Temperatur innerhalb des thermoplastischen Bereiches aufgeheizt, über einen Spann- oder Abdichtungsrahmen der Negativtiefziehform gespannt und durch Unterdruck (Vakuum) von der Seite der Negativtiefziehform her und durch Einführung des Stempels mit dem vorgeformten Träger vorgeformt und verformt, wobei im Augenblick der Berührung der Kunststoffschaumbahn oder Kunststoffschaumlaminatbahn mit der strukturierten Oberfläche oder Wandung des Negativtiefziehwerkzeuges die Kunststoffschaumbahn oder -schaumlaminatbahn diese Oberflächenstruktur (in Positivform) als Oberflächendekoration, Narbung oder Strukturierung annimmt, sich auf der Rückseite mit dem Träger verbindet und nachfolgend die thermoverformte Bahn in der Negativtiefziehform abgekühlt wird.

Nach dem erfindungsgemäßen Verfahren wird die Kunststoffschaumbahn im Zustand hoher Temperaturwerte innerhalb des thermoplastischen Bereiches (oder auch darüber) bei Berührung der Oberfläche des Negativtiefziehwerkzeuges in die poröse, vorzugsweise mikroporöse und/oder mikroskopische Oberflächenfeinstrukturen sowie gegebenenfalls zusätzliche Dekorstrukturen aufweisende Negativtiefziehform hineingepreßt und/oder angesaugt, thermoverformt und nimmt dabei die dekorative Oberfläche, eine Feinnarbung und/oder Strukturierung an.

Die Kunststoffschaumbahn oder Kunststoffschaumlaminatbahn befindet sich vor Einbringung in die Negativtiefziehform im gesamten Dickenbereich im thermoplastischen Zustand und die Negativtiefziehform weist eine Temperatur von 18 bis 120 °C, vorzugsweise 30 bis 78 °C, auf. Durch diese vorgenannten Verfahrensmaßnahmen erhält man spannungsarme dreidimensional verformte Kunststoffbahnen mit gleichzeitiger hoher Temperaturbeständigkeit der dekorativen Struktur und/oder genarbten Oberfläche.

Gemäß einer weiteren bevorzugten Ausführungsform der Erfindung wird die Kunststoffschaumbahn oder -schaumlaminatbahn vor der Einbringung in die Negativtiefziehform auf eine Temperatur in der Nähe oder oberhalb des Schmelzbereiches, Schmelzpunktes bis ca. 260 °C oder auf eine Temperatur innerhalb des thermoplastischen Bereiches (bis ca. 260 °C) aufgeheizt und die Werkzeugtemperatur (Temperatur der Negativtiefziehform) auf 18 bis 79 °C, vorzugsweise 25 bis 76 °C, unter Kühlung oder Temperierung der Negativtiefziehform eingestellt.

Die Negativtiefziehform besitzt bevorzugt eine poröse, luftdurchlässige, vorzugsweise mikroporöse luftdurchlässige, Formoberfläche, die ien metall-, metallegierungs-, mikrometallpartikelhaltige, keramik-metall- und/oder keramikmikrometallpartikelhaltige und/oder feinstteilige Füllstoffe enthaltende Schicht oder Oberfläche mit einer durchschnittlichen Partikeldicke unter 150 »m aufweist und steht in Kombination mit einer Zuleitungsvorrichtung und/oder Abzugsvorrichtung für die Kunststoffschaumbahn oder -schaumlaminatbahn oder Transportvorrichtung für das hergestellte verformte Formteil oder den Gegenstand.

Der Negativtiefziehform ist als Gegenwerkzeug ein Stempel oder eine ähnliche Vorrichtung zugeordnet. Der Stempel weist die Form oder Formteilbereiche der Negativtiefziehform (in Positivform) auf.

Die Negativtiefziehform enthält mindestens eine Oberflächenschicht als Formoberfläche, die aus einem Bindemittel, einem nicht wärmeleitenden oder schlecht wärmeleitenden anorganisch-chemischen feinteiligen Füllstoff, vorzugsweise Keramikpulver, mit einer mittleren Teilchengröße unter 80 »m, vorzugsweise unter 50 »m, sowie einem feinteiligen metall-, metallegierungs-, mikrometallpartikelhaltigen, keramikmetallpartikelhaltigen und/oder hitzebeständigen feinteiligen Pulver oder pulverförmigen Gemisch mit einer durchschnittlichen Partikeldicke unter 80 »m, vorzugsweise unter 60 »m, besteht.

Das Gewichtsverhältnis des nicht wärmeleitenden oder schlecht wärmeleitenden anorganisch-chemischen Füllstoffes zu dem feinstteiligen Metallpulver, Metallegierungspulver, keramikmetall- oder -mikrometallpartikelhaltigen Pulver beträgt 12 : 1 bis 1: 12, vorzugsweise 5 : 1 bis 1 : 5 (in der Verformungsoberflächenschicht der Negativtiefziehform).

In der Oberflächenschicht sind nach einer bevorzugten Ausführungsform zusätzlich Fasern aus anorganisch-chemischem Material, vorzugsweise Glasfasern, enthalten.

Die mittlere Teilchengröße (bezogen auf die Formoberflächenschicht) des anorganisch-chemischen, feinteiligen Füllstoffes zu dem feinteiligen Metallpulver steht im Verhältnis von 3 : 1 bis 1 : 10, vorzugsweise 1 : 1 bis 1 : 3.

Nach einer anderen Ausführungsform sind die Metall- oder Keramikpartikel durch andere feuerfeste oder temperaturbeständige Partikel ganz oder teilweise ersetzt. Die Negativtiefziehform und der Stempel sind nach einer Ausführungsform in einer mit Unterdruck oder mit Überdruck beaufschlagbaren Formkammer angeordnet.

Im Rahmen des erfindungsgemäße Verfahrens wird eine Polyolefinschaumlaminatbahn, vorzugsweise bestehend aus oder enthaltend Polyethylen, Polypropylen oder Mischungen von Polyethylen mit Polypropylen verwendet werden, wobei die der Negativtiefziehform zugewandte Oberflächenschicht (zu dekorierende oder narbende Schicht) vorzugsweise ungeschäumt ist und aus einem thermoplastischen Elastomeren besteht oder diesen enthält, der als mindestens eine Komponente eine Legierung, ein Co-, Pfropf-, Block- oder Terpolymerisat von oder mit einem Acrylnitril, Dien, Butadien, Ethylen-Butylen und/oder Styrol, vorzugsweise Ethylen-Butylen-Styrol-Triblockpolymerisat (SEBS) und/oder andere Styrolblockpolymere, Ethylen-Propylen-Dien-Pfropf- oder -Copolymerisat (EPDM), vernetzten oder teilvernetzten Naturkautschuk (NR), vernetzten oder teilvernetzten Nitril-Butadien-Kautschuk (NBR) und/oder Ethylen-Propylen-Co- oder Pfropfpolymerisat (EPM) enthält oder daraus besteht.

Die Oberfolie oder Oberschicht der Schaumlaminatbahn weist eine Shore-D-Härte von 25 bis 60, vorzugsweise 35 bis 55, auf. Die Dicke der Oberfolie oder Oberschicht beträgt 200 bis 1500 »m, vorzugsweise 400 bis 1200 ». Die mittlere Schaumschichtdicke der Schaumlaminatbahn beträt 1000 bis 5000 »m, vorzugsweise 1500 bis 3000 »m.

Nach einer bevorzugten Ausführungsform besteht die Kunststoffschaumlaminatbahn aus einer Oberschicht oder Oberfolie und einem Kunststoffschaum, wobei die Oberschicht oder Oberfolie ein Polyolefin, vorzugsweise ein Propylenhomo-, -co-, -block- oder -pfropfpolymerisat (Hartphase) und mindestens einen weiteren Thermoplasten oder ein thermoplastisches Elastomer mit einer niedrigeren Fließtemperatur oder niedrigerem Fließtemperaturbereich, Kristallitschmelztemperatur oder Kristallitschmelztemperaturbereich oder einem höheren Schmelzindex (Weichphase) enthält oder daraus besteht, wobei der Thermoplast oder das thermoplastische Elastomer als mindestens eine Komponente eine Legierung, ein Co-, Pfropf-, Block- oder Terpolymerisat von oder mit einem Acrylnitril, Dien, Butadien, Ethylenbuthylen und/oder Styrol, vorzugsweise Ethylen-Butylen-Styrol-Triblockpolymerisat (SEBS) und/oder andere Styrolblockpolymere, Ethylen-Propylen-Dien-Pfropf- oder -Copolymerisat (EPDM), vernetzten oder teilvernetzten Naturkautschuk (NR), vernetzten oder teilvernetzten Nitril-Butadien-Kautschuk (NBR) und/oder Ethylen-Propylen-Co- oder -pfropfpolymerisat (EPM) enthält.

Nach einer weiteren bevorzugten Ausführungsform enthält die Kunststoffmischung oder -legierung der Oberschicht oder Oberfolie der Schaumlaminatbahn ein Polystyrol (PS), Polyamid (PA), StyrolAcrylnitril-Co- oder -Pfropfpolymerisat (SAN) und/oder Acrylsäureester-Styrol-Acrylnitril-Copolymerisat (ASA) (Hartphase) und mindestens einen weiteren Thermoplasten oder ein thermoplastisches Elastomer mit einer niedrigen Fließtemperatur oder niedrigerem Fließtemperaturbereich, Kristallitschmelztemperatur oder Kristallitschmelztemperaturbereich oder einem höheren Schmelzindex (Weichphase) oder besteht daraus, wobei der Thermoplast oder das thermoplastische Elastomer als mindestens eine Komponente eine Legierung, ein Co-, Pfropf-, Block- oder Terpolymerisat mindestens einer der folgenden Verbindungen: Alken oder Alkenyl (C₁ - C₄) - Alkyl (C₁ - C₈)-Acrylat-Kohlenmonoxid-Terpolymerisat, Alken oder Alkenyl (C₁ - C₄) - Alkyl (C₁ - C₈)-Methacrylat-Kohlenomoxid-Terpolymerisat, Alken oder Alkenyl (C₁ - C₄) - Alkyl (C₁ - C₈)-Acrylat-Copolymerisat, Alken oder Alkenyl C₁ - C₄) - Alkyl (C₁ - C₈)-Methacrylat-Copolymerisat mit einem Alkyl-Acrylat-Gehalt oder Alkyl-Methacrylat-Gehalt von mehr als 12 Gew.-% (berechnt auf das jeweilige polare Gruppen enthaltende Plastifiziermittel mit 100 Gew.-Teilen) und mit statistisch verteilten Acrylat- oder Methacrylatgruppen bzw. Alkylacrylat- oder Alkylmethacrylatgruppen, vorzugsweise Ethylen-Butylacrylat-Kohlenmonoxid-Terpolymerisat, Ethylen-Hexylacrylat-Kohlenmonoxid-Terpolymerisat, Ethylen-Butylacrylat-Copolymerisat, Ethylen-Hexylacrylat-Copolymerisat, Ethylen-Vinylacetat-Copolymerisat und/oder Ethylen-Vinylacetat-Kohlenomoxid-Terpolymerisat und/oder Ethylen-Propylen-Dien-Co- oder -pfropfpolymerisat (EPDM), Ethylen-Propylen-Co- oder -pfropfpolymerisat (EPM), vernetzter oder teilernetzter Naturkautschuk (NR), vernetzter und/oder teilvernetzter Nitril-Butadien-Kautschuk (NBR) enthält oder daraus besteht.

Nach einer anderen Ausführungsform enthält die Kunststoffmischung oder -legierung der Oberschicht oder Oberfolie der Schaumlaminatbahn ein Polyurethan und/oder Polyetherester oder besteht daraus, wobei das Polyurethan und/oder der Polyetherester der Oberfolie oder Oberschicht eine Shore-D-Härte von 25 bis 50 aufweist oder durch Modifiziermittel darauf eingestellt ist.

Die Erfindung betrifft weiterhin die Verwendung der nach dem Negativtiefziehverfahren hergestellten Formteile oder Gegenstände, die aus einem Schaumlaminat und einem Träger bestehen, für Kraftfahrzeuginnenverkleidungen und Kraftfahrzeugteile, vorzugsweise für Schalttafeln, Konsolen, Seitenwände, Türpfosten und/oder Säulenverkleidungen.

## Patentansprüche

1. Verfahren zur Herstellung von Formteilen oder Gegenständen nach dem Negativtiefziehverfahren aus thermoverformbaren Kunststoffschaumbahnen oder thermoverformbaren Kunststoffschaumlaminatbahnen, die unter Mitverwendung eines Druckunterschiedes und unter Erwärmung auf eine Temperatur innerhalb des thermoplastischen Bereiches bis 260 °C in die Negativtiefziehform eingebracht und in der Negativtiefziehform unter Narbgebung und/oder Oberflächendekoration sowie unter Mitverwendung einer porösen, luftdurchlässigen Formoberfläche aufweisenden Negativtiefziehform verformt werden, wobei die Verformung und/oder Vorformung unter Mitverwendung eines Druckunterschiedes und unter Verwendung eines allseits wirkenden Unterdruckes sowie eines Trägers erfolgt, der mit der Bahn verbunden wird, dadurch gekennzeichnet, daß Kunststoffschaumbahnen oder Kunststoffschaumlaminatbahnen verwendet werden, deren Gesamtgehalt der bei der Verformungstemperatur und Verformungszeit flüchtigen Bestandteile kleiner als 3 Gew.-% ist, daß ein geformter Träger, der auf seiner der Negativtiefziehform zugewandten Oberfläche die Form, Formteilbereiche oder Oberflächenteilbereiche der Negativtiefziehform (in Positivtiefziehform) aufweist verwendet wird, daß die mikroporöse, luftdurchlässige Formoberfläche der Negativtiefziehform eine metall-, metallegierungs-, mikrometall-partikelhaltige, keramik-metall- und/oder keramik-mikrometall-partikelhaltige Schicht oder Oberfläche mit einer durchschnittlichen Metallschichtdicke oder Metallpartikeldicke unter 80 »m aufweist, daß die Negativtiefziehform auf eine Temperatur von 18 bis 120 °C eingestellt wird und zwischen der kälteren Werkzeugtemperatur und der Kunststoffschaumbahn oder Kunststoffschaumlaminatbahn ein Temperaturunterschied von mehr als 30 °C eingehalten wird, daß nach der Thermoverformung die Kunststoffschaumbahn oder Kunststoffschaumlaminatbahn in der Negativtiefziehform unter Verwendung einer Temperaturdifferenz von mehr als 50 K schockgekühlt wird und daß als Kunststoffschaum Polyethylen-, Polypropylen-, Polyethylen-Polypropylen-Schaum oder Polyurethanschaum angewendet wird, wobei für die Oberschicht oder Oberfolie der Kunststoffschaumlaminatbahn entweder die Zusammensetzung 1 verwendet wird, die ein Propylenhomo-, -co-, -block- oder pfropfpolymerisat (Hartphase) und mindestens einen weiteren Thermoplasten oder ein thermoplastisches Elastomer mit einer niedrigeren Fließtemperatur oder niedrigerem Fließtemperaturbereich, Kristallitschmelztemperatur oder Kristallitschmelztemperaturbereich oder einem höheren Schmelzindex (Weichphase) enthält oder daraus besteht, wobei der Thermoplast oder das thermoplastische Elastomer als mindestens eine Komponente eine Legierung, ein Co-, Pfropf-, Block- oder Terpolymerisat von oder mit einem Acrylnitril, Dien, Butadien, Ethylenbuthylen und/oder Styrol, vorzugsweise Ethylen-Butylen-Styrol-Triblockpolymerisat (SEBS) und/oder andere Styrolblockpolymere, Ethylen-Propylen-Dien-Pfropf- oder -Copolymerisat (EPDM), vernetzten oder teilvernetzten Naturkautschuk (NR), vernetzten oder teilvernetzten Nitrol-Butadien-Kautschuk (NBR) und/oder Ethylen-Propylen-Co- oder Pfropfpolymerisat (EPM) enthält oder die Zusammensetzung 2 eingesetzt wird, die ein Polystyrol (PS), Polyamid (PA), Styrol-Acrylnitril-Co- oder -Pfropfpolymerisat (SAN) und/oder Acrylsäureester-Styrol-Acrylnitril-Copolymerisat (ASA) (Hartphase) und mindestens einen weiteren Thermoplasten oder ein thermoplastisches Elastomer mit einer niedrigeren Fließtemperatur oder niedrigeren Fließtemperaturbereich, Kristallitschmelztemperatur oder Kristallitschmelztemperaturbereich oder einem höheren Schmelzindex (Weichphase) enthält oder besteht daraus.

2. Verfahren nach Anspruch 1, dadurch gekennzeichnet, daß der vorgeformte Träger von einem Stapel oder einer Stapelvorrichtung, in dem oder in der der Träger gestapelt ist, durch eine Übergabevorrichtung auf ein vorbestimmtes Oberflächenteil der der Negativtiefziehform zugewandten Oberfläche des Stempels aufgebracht wird.

3. Verfahren nach Ansprüche 1 und 2, dadurch gekennzeichnet, daß eine Polyolefinschaumlaminatbahn, vorzugsweise bestehend aus oder enthaltend Polyethylen, Polypropylen oder Mischungen von Polyethylen mit Polypropylen verwendet werden, wobei die der Negativtiefziehform zugewandte Oberflächenschicht (zu dekorierende oder narbende Schicht) vorzugsweise ungeschäumt ist und aus einem thermoplastischen Elastomeren besteht oder diesen enthält, der als mindestens eine Komponente eine Legierung, ein Co-, Pfropf-, Block- oder Terpolymerisat von oder mit einem Acrylnitril, Dien, Butadien, Ethylen-Butylen und/oder Styrol, vorzugsweise Ethylen-Butylen-Styrol-Triblockpolymerisat (SEBS) und/oder andere Styrolblockpolymere, Ethylen-Propylen-Dien-Pfropf- oder -Copolymerisat (EPDM), vernetzten oder teilvernetzten Naturkautschuk (NR), vernetzten oder teilvernetzten Nitril-Butadien-Kautschuk (NBR) und/oder Ethylen-Propylen-Co- oder Pfropfpolymerisat (EPM) enthält oder daraus besteht.

4. Verfahren nach einem oder mehreren der Ansprüche 1 bis 3, dadurch gekennzeichnet, daß die Kunststoffschaumbahn oder Kunststoffschaumlaminatbahn mindestens einer Vorwärm- und/oder Aufheizstation vorgewärmt und/oder auf eine Temperatur innerhalb des thermoplastischen Bereiches aufgeheizt, oder anstelle einer Kunststoffschaumlaminatbahn eine aus einem Breitschlitzextruder austretende Schmelzenbahn unter Ausnutzung der Wärmekapazität der Schmelzenbahn mit verwendet wird, die über einen Spann- oder Abdichtungsrahmen der Negativtiefziehform oder Kammer gebracht, gespannt und abgedichtet, gegebenenfalls durch Vorblasen, Stützluft oder Stützgas gehalten, nachfolgend durch Erhöhung des Blasdruckes zu der Negativtiefziehform hin gewölbt und durch einen vorgeformten Träger und/oder ein Stempelteil vorgeformt wird, in der Negativtiefziehform unter Narbgebung und/oder Oberflächendekoration thermoverformt, vorzugsweise unter Verwendung einer Temperaturdifferenz von mehr als 80 °C, vorzugsweise mehr als 100 °C, zwischen der Kunststoffschaumbahn oder Kunststoffschaumlaminatbahn und Negativtiefziehform und nachfolgend in der Negativtiefziehform unter Verwendung einer Temperaturdifferenz von mehr als 100 °C (bezogen auf die Temperatur der Kunststoffschaumbahn oder Kunststoffschaumlaminatbahn unmittelbar vor oder im Augenblick der Einbringung in die Negativtiefziehform) gekühlt oder schockgekühlt wird.

## Claims

1. Process for producing parts of forms or objects, based on a deep drawing process, from heat-deformable webs of synthetic foam or webs or a heat-deformable synthetic foam laminate which, using a pressure-difference and through heating to a temperature within a thermoplastic range of up to 260 °C, are introduced into a negative deep drawing mould and are given a form concerned with graining and/or surface adorning and with use of a negative deep drawing mould having a porous, free-venting mould surface, whereby form-development and/or preforming occurs with use of a pressure difference and with use of a negative pressure acting on all sides and with use of a support which is connected to a web concerned, wherein webs of synthetic foam or webs of a synthetic foam laminate, are used, which have an overall content of fluid contents which, at a form-development temperature and during a form-development period, is less than 3% weight, and a formed support, which has a form, section of a form or section of a surface of a negative deep drawing mould (in a positive deep drawing form) on a surface which faces away from a negative deep drawing mould concerned, is used, and a microporous, free-venting form-surface of a negative deep drawing mould has a layer or surface containing metal alloy, micro metal particles, ceramic-metal particles and/or ceramic micro metal particles with an average thickness or metal particle thickness of less than 80 »m, and a negative deep drawing mould is set at a temperature of 18 to 120 °C and a temperature difference of more than 30°C is maintained between a lower tool temperature and a temperature of a web of synthetic foam or a web of a synthetic foam laminate, and, after heat-deformation, a web of synthetic foam or a web of a synthetic foam laminate is instantaneously cooled in a negative deep drawing mould concerned with use of a temperature difference of more than 50 °K, and polyethylene foam, polypropylene foam, polyethylene-polypropylene foam or polyurethane foam is used as synthetic foam, whereby either a composition 1, which contains or comprises a polypropylene homo-, co-, block- or graft-polymeride (hard phase) and at least one other thermoplast or a thermoplastic elastomer with a low flow point or low flow range, crystallite melting point or crystallite melting range or a high melting index (soft phase), is used for an upper layer or upper sheet, whereby a thermoplast or a thermoplastic elastomer contains, as at least one component, an alloy, a co-, graft-, block- or terpolymeride of or with an acrylnitrile, diene, butadiene, ethylene butylene and/or styrol, preferably ethylene-butylene-styrol-triblockpolymeride (SEBS) and/or other styrol block polymers, ethylene-propylene-diene-graft- or co-polymeride (EPDM), networked or partly networked natural rubber (NR), networked or partly networked nitrile-butadiene-rubber (NBR) and/or ethylene-propylene-co- or graft-polymeride (EPM), or a composition 2 is used which contains or comprises a polystyrene (PS), polyamide (PA), styrolacrylnitrile-co- or graft-polymeride (SAN) and/or acrylate-styrol-acrylnitrile-copolymeride (ASA) (hard phase) and at least one other thermoplast or a thermoplastic elastomer with a low flow temperature or low flow temperature range, crystallite melting point or crystallite melting temperature range or a high melting index (soft phase).

2. Process in accordance with claim 1, wherein a pre-formed support is applied onto a predetermined surface section of a surface of a press which faces a negative deep drawing mould, by means of a transferring device, by a staple or stapling device into which a said support is stapled.

3. Process in accordance with claims 1 and 2, wherein a web of polyolefin foam laminate, preferably comprising or containing polyethylene, polypropylene or mixtures of polyethylene with polypropylene, is used, whereby a surface layer (layer to be decorated or adorned) facing a negative deep drawing mould is preferably unfoamed and made of or containing a thermoplastic elastomer, which contains or comprises, as at least one constituent, an alloy, a co-, graft-, block- or terpolymeride of or with an acrylnitrile, diene, butadiene, ethylene butylene and/or styrol, preferably ethylene-butylene-styrol-triblock-polymeride (SEBS) and/or other styrol block polymers, ethylene-propylene-diene-graft- or copolymeride (EPDM), networked or partly networked natural rubber (NR), networked or partly networked nitrile-butadiene-rubber (NBR) and/or ethylene-propylene-co- or graft-polymeride (EPM).

4. Process in accordance with one or several of claims 1 to 3, wherein at least one preheating and/or heating station is preheated and/or is heated to a temperature within a thermoplastic range, or a web of melt from a wide-slitted extruder, with use of a heat capacity of a said web of melt, instead of a web of synthetic foam laminate, is used, with a web of synthetic foam or web of synthetic foam laminate, which is applied by means of a tensioning or sealing frame of a negative deep drawing mould or chamber, is held under tension, sealed, by means of preliminary blowing where applicable, is held by means of supporting air or gas, and is then arched into a negative deep drawing mould by raising a blowing pressure, and is pre-formed by means of a pre-formed support and/or a section of a press, is heat moulded in a negative deep drawing mould with adorning and/or surface decoration, preferably with use of a temperature difference of more than 80°C, preferably of more than 100°C, between a web of synthetic foam or web of a synthetic foam laminate and a negative deep drawing mould and is then cooled or instantaneously cooled in a negative deep drawing mould, with use of a temperature difference of more than 100°C (in relation to a temperature of a web of synthetic foam or web of synthetic foam laminate immediately before or at a moment of introduction into a negative deep drawing mould).

## Revendications

1. Procédé de fabrication de pièces moulées ou d'objets suivant le procédé d'emboutissage négatif à partir de bandes de mousse en matière plastique thermoformables ou de bandes laminées de mousse en matière plastique thermoformables, qui sont introduites dans le moule d'emboutissage négatif par l'utilisation conjointe d'une différence de pression et grâce à un réchauffement à une température comprise dans la plage thermoplastique jusqu'à 260 °C, et qui sont façonnées dans le moule d'emboutissage négatif avec grainage et/ou décoration superficielle, de même que par l'utilisation conjointe d'un moule d'emboutissage négatif présentant une surface de moulage poreuse et perméable à l'air, où le façonnage et/ou le préformage est réalisé grâce à l'utilisation conjointe d'une différence de pression et grâce à l'utilisation d'un vide partiel agissant de toutes parts, de même que d'un support, qui est relié à la bande, caractérisé en ce qu'on utilise des bandes de mousse en matière plastique ou des bandes laminées de mousse en matière plastique dont la teneur totale en composants volatils à la température de façonnage et pendant la durée du façonnage est inférieure à 3 % en poids, en ce qu'on utilise un support façonné, qui présente sur sa surface orientée vers le moule d'emboutissage négatif la forme, les sous-domaines d'une forme ou les sous-domaines d'une surface du moule d'emboutissage négatif (sous forme d'emboutissage positif), en ce que la surface du moule d'emboutissage négatif microporeux et perméable à l'air présente une couche ou une surface contenant des particules de métal, d'alliage métallique, micrométalliques, métallo-céramiques et/ou micrométallo-céramiques avec une épaisseur moyenne de la couche métallique ou avec une épaisseur moyenne des particules métalliques inférieure à 80 »m, en ce que le moule d'emboutissage négatif est réglé à une température de 18 à 120 °C et qu'on maintient une différence de température supérieure à 30 °C entre la température plus froide de l'outil et celle de la bande de mousse en matière plastique ou de la bande laminée de mousse en matière plastique, en ce qu'on refroidit par choc thermique, après le façonnage thermique, la bande de mousse en matière plastique ou la bande laminée de mousse en matière plastique dans le moule d'emboutissage négatif par l'utilisation d'une différence de température supérieure à 50 K et que l'on utilise en tant que mousse en matière plastique une mousse de polyéthylène, de polypropylène, de polyéthylène-polypropylène ou une mousse de polyuréthane, où on utilise pour la couche supérieure ou la feuille supérieure de la bande laminée de mousse en matière plastique - soit la composition 1, qui contient ou qui est constituée d'un homopolymère, copolymère, polymère séquencé ou polymère greffé du propylène (phase rigide) et d'au moins une autre matière thermoplastique ou un élastomère thermoplastique présentant une température de fluidité plus basse ou une plage de températures de fluidité plus basse, ou une température de fusion des cristallites plus basse ou une plage de températures de fusion des cristallites plus basse ou un indice de fusion plus élevé (phase plastique), la matière thermoplastique ou l'élastomère thermoplastique contenant en tant qu'au moins une composante un alliage, un copolymère, un polymère greffé, un polymère séquencé ou un terpolymère de ou avec un acrylonitrile, un diène, un butadiène, un éthylène-butylène et/ou un styrène, de préférence un polymère triséquencé d'éthylène-butylène-styrène (SEBS) et/ou d'autres polymères séquencés du styrène, un polymère greffé ou copolymère d'éthylène-propylène-diène (EPDM), du caoutchouc naturel (NR) réticulé ou partiellement réticulé, du caoutchouc de nitrile-butadiène (NBR) réticulé ou partiellement réticulé et/ou un polymère greffé ou copolymère d'éthylène-propylène (EPM), - soit la composition 2, qui contient ou qui est constituée d'un polystyrène (PS), un polyamide (PA), un copolymère ou un polymère greffé de styrène-acrylonitrile (SAN) et/ou un copolymère d'ester acrylique-styrène-acrylonitrile (ASA) (phase rigide) et d'au moins une autre matière thermoplastique ou un élastomère thermoplastique présentant une température de fluidité plus basse ou une plage de températures de fluidité plus basse, ou une température de fusion des cristallites plus basse ou une plage de températures de fusion des cristallites plus basse ou un indice de fusion plus élevé (phase plastique).

2. Procédé selon la revendication 1, caractérisé en ce que le support préformé est appliqué par l'intermédiaire d'un dispositif de transfert à partir d'un empilement ou d'un dispositif d'empilement, dans lequel le support est empilé sur une partie déterminée de la surface du poinçon orientée vers le moule d'emboutissage négatif.

3. Procédé selon les revendications 1 et 2, caractérisé en ce qu'on utilise une bande laminée de mousse polyoléfinique, constituée ou contenant de préférence du polyéthylène, du polypropylène ou des mélanges de polyéthylène et de polypropylène, où la couche superficielle orientée vers le moule d'emboutissage négatif (couche à décorer ou à grainer) est de préférence non-expansée et constituée de ou contient un élastomère thermoplastique, qui contient ou est constitué en tant qu'au moins une composante un alliage, un copolymère, un polymère greffé, un polymère séquencé ou un terpolymère de ou avec un acrylonitrile, un diène, un butadiène, un éthylène-butylène et/ou un styrène, de préférence un polymère triséquencé d'éthylène-butylène-styrène (SEBS) et/ou d'autres polymères séquencés du styrène, un polymère greffé ou copolymère d'éthylène-propylène-diène (EPDM), du caoutchouc naturel (NR) réticulé ou partiellement réticulé, du caoutchouc de nitrile-butadiène (NBR) réticulé ou partiellement réticulé et/ou un polymère greffé ou copolymère d'éthylène-propylène (EPM).

4. Procédé selon une ou plusieurs des revendications 1 à 3, caractérisé en ce que la bande de mousse en matière plastique ou la bande laminée de mousse en matière plastique est préchauffée dans au moins une station de préchauffage et/ou d'échauffement et/ou chauffée à une température comprise dans la plage thermoplastique, ou qu'on utilise conjointement, au lieu d'une bande laminée de mousse en matière plastique, une bande en fusion sortant d'une extrudeuse à filière plate, en exploitant la capacité calorifique de la bande en fusion, laquelle est amenée par un cadre de serrage ou d'étanchéité au moule d'emboutissage négatif ou à la chambre, tendue et rendue étanche, le cas échéant tenue par présoufflage, par de l'air de support ou par un gaz de support, ensuite bombée par augmentation de la pression de soufflage dans la direction du moule d'emboutissage négatif et préformée par un support préformé et/ou un poinçon, elle est façonnée thermiquement dans le moule d'emboutissage négatif avec grainage et/ou décoration de la surface, de préférence en utilisant une différence de température supérieure à 80 °C, de préférence supérieure à 100 °C, entre la bande de mousse en matière plastique ou la bande laminée de mousse en matière plastique et le moule d'emboutissage négatif, et ensuite refroidie ou refroidie par choc thermique, dans le moule d'emboutissage négatif, en utilisant une différence de température supérieure à 100 °C (par rapport à la température de la bande de mousse en matière plastique ou de la bande laminée de mousse en matière plastique immédiatement avant ou au moment de l'introduction dans le moule d'emboutissage négatif).
